# EUROPEAN PATENT SPECIFICATION

(11) **EP 3 904 133 B1**
(45) Date of publication and mention of the grant of the patent: **17.09.2025**
(21) Application number: 21170190.9
(22) Date of filing: 23.04.2021
(51) Int. Cl.: B60G 11/27, F16F 9/04, B60G 15/12, F16F 9/02, F16F 9/084, B62D 33/06

(54) **AIR SUSPENSION ASSEMBLY**
LUFTFEDERUNGSANORDNUNG
ENSEMBLE DE SUSPENSION PNEUMATIQUE

(30) Priority: 27.04.2020 US 202063016237 P; 26.02.2021 CN 202110217133
(43) Date of publication of application: 03.11.2021
(73) Proprietor: BeijingWest Industries Co. Ltd., 102400 Beijing (CN)
(72) Inventor: ROSE, Iain, Luton Beds, Bedfordshire LU27LZ (GB); CHEVALLEREAU, Baptiste, 75001 Paris (FR); MARCHAND, Jocelyn, 92300 Levallois Perret (FR)
(74) Representative: Lukaszyk, Szymon

(56) References cited:
- DE-A1- 102013 221 048
- FR-A1- 2 747 754
- JP-A- 2000 313 219
- US-A- 1 516 004
- US-A- 2 056 106
- US-A- 4 890 822
- US-A1- 2016 215 844
- US-B1- 6 332 602

## Description

### Field of the Invention

The present invention generally relates to an air suspension assembly.

### Description of the Prior Art

Air suspension assemblies are often used in the axle/suspension systems of a vehicle. They can also be used in other applications, such as, for example, cushioning the cab of a vehicle. Typically, the air suspension assemblies utilize boots to cushion the ride, dampen vibrations, and stabilize the vehicle. The air sleeve, operating as a rolling lobe, is ordinarily made of rubber and cords so that the air sleeve has a high enough strength to maintain air pressure inside the air sleeve. The use of an air sleeve requires a costly rubber-forming process and typically requires great air pressure to support it. Reinforcing cords are required and often an additional restraining cylinder is required to withstand this pressure.

One such an air suspension assembly is disclosed in U.S. Patent 10,618,366. The air suspension assembly comprises a top and a bottom disposed on a center axis and spaced apart from one another. A bellows of an elastomeric material extends between a first end secured to the top and a second end secured to the bottom defining a chamber. The chamber extends between the top, the bottom, and the bellows for containing pressurized air, whereby a pressure of the pressurized air is controlled based on a force applied. The bellows has an interior surface and an exterior surface and including a plurality of convolutes extending between the first end and the second end.
Document US2016/215844A1, which shows the preamble of claim 1, discloses an elasticity-adjustable corrugated cavity fluid pressure spring structure. A compression spring with a sealed chamber formed by a resilient tube body, a top panel unit and a bottom panel unit. The chamber connects to an external elastic structure through a channel and a valve unit. The resilient tube body is a corrugated body defining a crest portion, a trough portion and the remaining portion. A rigid frame structure can be mounted on the crest and trough portions for facilitating expansion in the thinner remaining portion. When the chamber is fluid filled and pressed axially, the remaining portion deforms to hold a larger amount of fluid or the excessive fluid flows through the channel to the elastic structure. A rope unit can be provided for restricting axial expansion and preset a particular length range for a particular use. The valve unit can be controlled before or during the use of the compression spring to control the axial elasticity.
Document US 1516004A discloses a shock absorber. The combination of a vehicle frame, a vehicle sprint, and a shock absorber comprising a hollow member formed of laterally extending expansible side walls converging to a circumferential non-expansible pressure resisting area, a top plate fixed to one end of said member and connected to said vehicle frame, a base plate fixed to the other end of said member and connected to said vehicle spring, and means for inflating said member.
Document US 6332602B1 discloses a vehicle suspension having annular air chamber. An annular bellows unit for replacing a vehicle suspension coil spring that encloses a shock absorber or hydraulic actuator includes annular second flange members that are sealingly connected at opposite ends of respective inner and outer bellows members to form a closed chamber, and a fill port in one of the flange members for pressurizing the chamber.
Document DE102013221048A1 discloses a flexible wall and compression core assemblies as well as gas spring assemblies and methods including same. An assembly includes a flexible wall, that can at least partially define a spring chamber for containing pressurized gas. The flexible wall can include at least one mounting bead formed along an end thereof. A compression core can be disposed along the exterior of the flexible wall in abutting engagement with the mounting bead. The compression core can be captured between the mounting bead and a portion of the flexible wall such that inflation of the spring chamber biases the flexible wall, mounting bead and compression core outward and into engagement with an end member to form a gas spring assembly. A suspension system and a method of assembly are also included.
Document US 4890822A discloses a car suspension system. A suspension system according to the present invention comprises a cylinder assembly, which includes a cylinder and a rod fitted therein for axial reciprocation. An oil chamber containing oil and a gas chamber containing gas are defined inside the cylinder assembly. A damping-force generating mechanism is provided in the oil chamber, whereby a damping force is applied to the reciprocation of the rod. A bellows is contained in the cylinder assembly. The bellows includes an oil-resistant body made of an elastomer, and a gas-barrier film made of a material impermeable to gas and formed on the surface of the body. The oil and gas chambers are isolated completely from each other by the bellows.
Document US 2056106A discloses a pneumatic spring device including a built-up casing of tire fabric provided with a plurality of ribs, steel bands provided with vertical apertures encircling said ribs, and guide rods extending through aligned apertures of the respective bands.
Document JP 2000313219A discloses a suspension construction capable of adjusting the ride quality and the height of a vehicle body mounted with a suspension using a coil spring. This suspension construction for vehicles has a damper and a coil spring inserted into the damper. The damper has a cylinder and a rod inserted into the cylinder. By attaching an air spring unit in place of the coil spring to the damper, the ride quality and the height of the vehicle can be adjusted in a vehicle body mounted with a suspension including coil springs. This air spring unit has a first receiving plate gas-tightly attached to an outer periphery of the cylinder, a second receiving body gas-tightly attached to an outer periphery of the rod, and bellows of an industrial air spring interposed between the first receiving plate and the second receiving plate.
Document FR2747754A1 discloses a vehicle shock absorber protection bellows stop travel limiter. The stop for limiting the travel of a shock absorber protective bellows comprises an elastic compression element passed through by the shock absorber rod. The rod is connected at one end to a frame relative to which the stop is held by a support. The other end of the rod slides in the shock absorber cylinder which is connected to a part capable of displacing relative to the frame. One end of the bellows is connected to the stop and the other end is driven by the cylinder during absorber movement. The stop limits travel of the cylinder in the direction of the frame and exerts a reaction force on the cylinder at the end of travel. The compression force of the stop, at the end of travel, is transmitted to the cylinder by the stop through the bellows.

### Summary of the invention

The present invention provides for an air suspension assembly that is simple and cost-effective by replacing the rubber bellows previously used in other air suspension assemblies with a robust thermoplastic elastomer bellows. In addition, the invention also provides a simple and cost-effective manufacturing process of forming the bellows. Furthermore, the invention provides cost reduction by requiring a lower-power compressor to support the bellows.

It is one aspect of the present invention to provide an air suspension assembly. The air suspension assembly comprises a top and a bottom disposed on a center axis and spaced apart from one another. A bellows of an elastomeric material extends between a first end secured to the top and a second end secured to the bottom defining a chamber. The chamber extends between the top, the bottom, and an interior surface of the bellows for containing pressurized air, whereby a pressure of the pressurized air is controlled based on a force applied. The bellows has the interior surface and an exterior surface and has a varying bellows thickness between the interior surface (88) and the exterior surface, and includes a plurality of convolutes, each having a generally sinusoidal-shaped cross-section, extending between the first end and the second end. Each convolute of the plurality of convolutes includes a pair of outer lobes and an inner lobe, wherein each convolute of said plurality of convolutes extends in a wave-like fashion between the pair of outer lobes, each having a generally arcuate-shaped cross-section, with the inner lobe, having a generally U-shaped cross-section, disposed radially inwardly from the pair of outer lobes and between the pair of outer lobes, wherein the pair of outer lobes, spaced apart from one another along the center axis, is disposed radially outwardly from the inner lobe, and each outer lobe of said pair of outer lobes delimits an outer diameter of the bellows, wherein each outer lobe of the pair of outer lobes has an exterior outer lobe radius and an interior outer lobe radius, thereby defining an outer lobe thickness extending between the interior surface and the exterior surface of the bellows. The inner lobe has an exterior inner lobe radius and an interior inner lobe radius, thereby defining an inner lobe thickness extending between the interior surface and the exterior surface of said bellows. The bellows are moveable along the center axis between an undeformed position and a full bump position of the air suspension assembly, wherein adjacent inner lobes directly abut one another and adjacent outer lobes also directly abut one another in the full bump position of the air suspension assembly, wherein the air suspension assembly further includes a bridge portion, having a generally constant bridge portion thickness extending between the interior surface and the exterior surface of said bellows, extending between said inner lobe and each outer lobe of said pair of outer lobes to connect the inner lobe to the outer lobe, wherein the inner lobe extends between the bridge portions and delimits an inner diameter of the bellows, wherein each convolute has a height extending between the outer lobes and a width extending between the outer diameter and the inner diameter, wherein the inner lobe is disposed along a mid-plane of the convolute, which is roughly half of the height, wherein the bridge portion has a slight radius of curvature between the outer lobe and the inner lobe, and adjacent bridge portions are at least partially spaced from each other in the full bump position of the air suspension assembly. The air suspension assembly further includes a damper connected to said bottom and moveable with said bellows between the full bump position and the undeformed position of the air suspension assembly; and a jounce bumper connected to said top for absorbing energy of said damper when said air suspension assembly is compressed, with said damper compressing said jounce bumper in said full bump position and said damper spaced from said jounce bumper in said undeformed position.

### Brief description of the drawings

Other advantages of the present invention will be readily appreciated, as the same becomes better understood by reference to the following detailed description when considered in connection with the accompanying drawings wherein:
Fig. 1 is a cross-sectional view of an air suspension assembly in a default operating position constructed according to an embodiment of the present invention;
Fig. 2 is a cross-sectional view of the air suspension assembly in a compressed position constructed according to an embodiment of the present invention;
Fig. 3 is a cross-sectional view of the air suspension assembly in a undeformed position;
Fig. 4 is a fragmentary cross-sectional view of a convolute of a bellow; and
Fig. 5 is a load deflection curve of the air suspension assembly.

### Description of the enabling embodiment

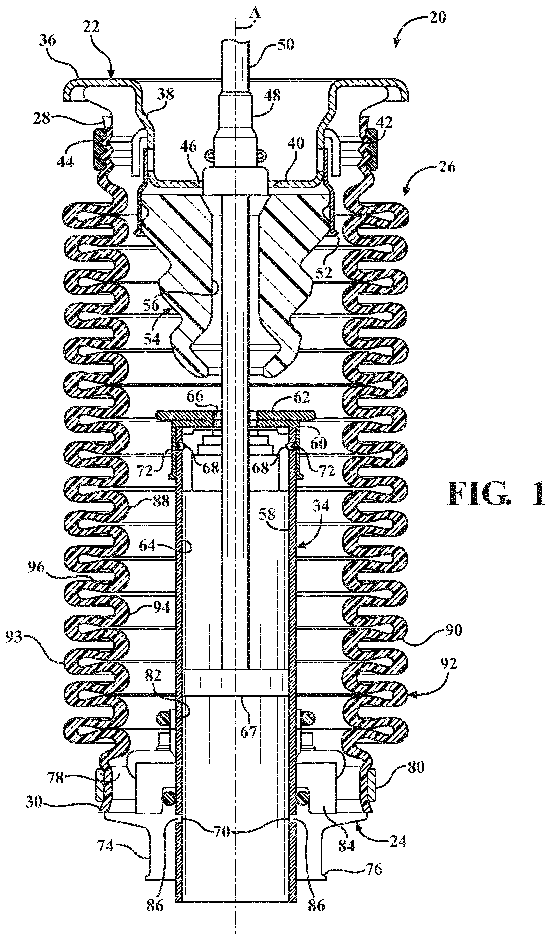

Referring to the Figures, wherein like numerals indicate corresponding parts throughout the several views, an air suspension assembly 20 constructed according to an embodiment of the present invention is generally shown in Figs. 1-4.

The air suspension assembly 20, as generally shown in Figs. 1-3, may be used to support and stabilize vehicles such as cars, vans, trucks, motorbikes, bicycles but also may be used on heavy-duty vehicles, such as semi-trucks, trailers, or the like. The air suspension assembly 20 includes a top 22 and a bottom 24 disposed on a center axis A and spaced apart from one another. According to an embodiment of the present invention, the top 22 may have a cylindrical shape and a U-shaped cross-section. The bottom 24 may have an inverted cup shape and an inverted U-shape cross-section. A bellows 26, such as an air sleeve, made from an elastomeric material (e.g. a versatile thermoplastic elastomer) having a tubular shape is disposed on the center axis A and extends annularly about the center axis A between a first end 28 and a second end 30. According to an embodiment of the present invention, the bellows 26 may be thermalplastic elastomer that is a heat resilient and/or chemical resistant material, such as the thermal plastic elastomer sold under the trademark Hytrel by DuPont. According to an embodiment of the present invention, the bellows 26 may consist essentially of the thermalplastic elastomer. According to another embodiment of present invention, the bellows 26 may consist of the thermalplastic elastomer. The first end 28 of the bellows 26 is secured to the top 22 and the second end 30 of the bellows 26 is secured to the bottom 24 defining a chamber 32 extending between the top 22, the bottom 24, and the bellows 26. In other words, the bellows 26 connects the top 22 to the bottom 24 to establish the chamber 32 between the top 22, the bellows 26, and the bottom 24. A damper 34 having a generally cylindrical shape is disposed on the center axis A at least partially within the chamber 32 and is secured to the bottom 24.

The top 22 includes a plate 36, which may have a circular shape, disposed on the center axis A for securing the air suspension assembly 20 to the vehicle. A side wall 38 having a cylindrical shape extends perpendicularly outwardly from the plate 36, parallel to the center axis A, and radially inwardly towards the chamber 32. A base wall 40 extends radially inwardly from the side wall 38 toward the center axis A. The side wall 38 includes a plurality of first ridges 42, spaced from one another, extending outwardly from the side wall 38 and annularly about the side wall 38 in a perpendicular relationship with the center axis A to receive the first end 28 of the bellows 26. A first ring 44 having a circular shape is disposed on the bellows 26 at the first end 28 of the bellows 26 and extends annularly about the side wall 38 of the top 22 to secure the bellows 26 to the side wall 38 of the top 22. In other words, the first ring 44 sandwiches the first end 28 of the bellows 26 between the first ring 44 and the first ridges 42 of the side wall 38.

The base wall 40 defines a hole 46 having a circular shape and disposed on the center axis A. A piston rod guide 48 having a cylindrical shape extends annularly about the center axis A and through the hole 46. The piston rod guide 48 may form a first central channel (not shown) extending along the center axis A for receiving a piston rod 50. A sleeve 52 is secured to the side wall 38 and extends annularly along the center axis A into the chamber 32. An internal spring 54 of an elastomeric material (e.g. a versatile thermoplastic elastomer), having a generally frustoconical shape, extends along the center axis A and is connected to and extends from the sleeve 52 of the top 22 into the chamber 32. According to an embodiment of the present invention, the internal spring 54 can be made from a heat resilient and/or chemical resistant material, such as a thermalplastic elastomer sold under the trademark Hytrel by DuPont. In some embodiments, the material (for example, Hytrel by DuPont) and dimensions of the bellows 26 may allow the bellows to be formed by blow-molding, as opposed to typical complex and costly rubber-forming techniques. The internal spring 54 defines a second central channel 56, having a generally cylindrical shape, disposed in-line with the first central channel and extending along the center axis A along the length of the internal spring 54 for allowing the piston rod 50 to extend into the chamber 32. In some embodiments, the internal spring 54 is a jounce bumper and may be made of a compressible material to absorb the energy of the damper 34 when the air suspension assembly 20 is compressed.

The damper 34 includes a housing 58 and a cap 60, each having a cylindrical shape and extending along the center axis A. The housing 58 extends between a proximal end (not shown) and a distal end 62. The distal end 62 is located in the chamber 32. The proximal end is located outside of the chamber 32 for connecting the air suspension assembly 20 to the vehicle. The cap 60 is secured to the housing 58 at the distal end 62 to form a compartment 64 inside the housing 58. The cap 60 and the housing 58 define a third central channel 66 extending along the center axis A for receiving the piston rod 50. It should be appreciated that, in some embodiments, the damper 34 may be a hydraulic damper with hydraulic fluid disposed inside the compartment 64, and the piston rod 50 may include a hydraulic piston 67 disposed inside the compartment 64 for interacting with the hydraulic fluid. The piston rod 50 and the hydraulic piston 67 are movable between a compression stroke and a rebound stroke. During the compression stroke, the piston rod 50 and the hydraulic piston 67 move axially away from the cap 60. During the rebound stroke, the piston rod 50 and the hydraulic piston 67 move axially toward the cap 60.

The housing 58 further defines two sets of bores 68, 70, including a first set of bores 68 and a second set of bores 70, axially spaced apart from one another. The first set of bores 68 is located adjacent the distal end 62 of the housing 58 and disposed about the center axis A. Each bore 68 of the first set of bores 68 is circumferentially spaced apart from adjacent bores of the first set of bores 68 for interacting with the cap 60. The cap 60 includes a plurality of protrusions 72 extending radially inwardly, wherein a protrusion 72 of the plurality of protrusions 72 is received in a bore of the first set of bores 68 to secure the cap 60 to the housing 58. The second set of bores 70 is located outside of the chamber 32 adjacent the bottom 24. The second set of bores 70 are spaced circumferentially from one another about the center axis A for interacting with the bottom 24.

The bottom 24 includes a body 74 extending annularly about the center axis A between the damper 34 and the bellows 26. The body 74 has a periphery 76 extending about the body 74. The body 74 includes a plurality of second ridges 78, axially spaced apart from one another, extending outwardly from the body 74 perpendicular to the center axis A for receiving the second end 30 of the bellows 26. A second ring 80 having a circular shape is disposed on the bellows 26 at the second end 30 of the bellows 26 and extending annularly about the body 74 of the bottom 24 to secure the bellows 26 to the body 74 of the bottom 24. In other words, the second end 30 of the bellows 26 is sandwiched between the second ring 80 and the second ridges 78 to secure the second end 30 of the bellows 26 to the bottom 24. The bottom 24 defines a fourth central channel 82 having a cylindrical shape disposed on the center axis A for receiving the damper 34. The bottom 24 further includes a collar portion 84 having a cylindrical shape extending along the center axis A for securing the bottom 24 to the damper 34. According to an embodiment of the present invention, the collar portion 84 may include at least one pin 86 extending radially inwardly toward the center axis A for engaging the second set of bores 70 of the housing 58 to secure the damper 34 to the bottom 24. It should be noted that the damper 34 can be secured to the bottom 24 using other ways, such as clamps, screws, or other well-known methods.

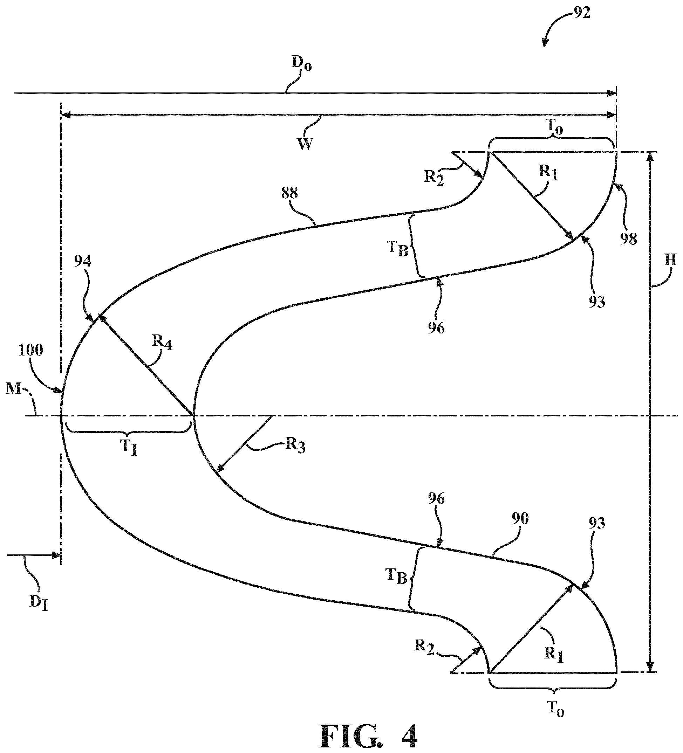

According to an embodiment of the present invention, the bellows 26 has a varying bellows thickness T formed between an interior surface 88 disposed adjacent the chamber 32 and an exterior surface 90 disposed outside of the chamber 32. The bellows 26 has a series of convolutes 92, each having a generally sinusoidal-shaped (e.g., "W"-shaped) cross-section, extending between the first end 28 and the second end 30 to provide strength to the bellows 26 and to allow the bellows 26 to compress and retract. Referring now to Fig. 4, a convolute 92 of the series of convolutes 92 extends in a wave-like fashion between two outer lobes 93, each having a generally arcuate-shaped cross-section, with an inner lobe 94 disposed between the outer lobes 93. The outer lobes 93, spaced apart from one another along the center axis A, are disposed radially outwardly from the inner lobe 94. Each outer lobe 93 delimits an outer diameter D_{O} of the bellows 26. A bridge portion 96, having a generally constant bridge portion thickness T_{B} extending between the interior surface 88 and the exterior surface 90, extends between each outer lobe 93 and the inner lobe 94 to connect the inner lobe 94 to the outer lobe 93. The inner lobe 94, having a generally U-shaped cross-section, is disposed radially inwardly from the outer lobes 94 and between the outer lobes 94. The inner lobe 94 extends between the bridge portions 96 and delimits an inner diameter D_{I} of the bellows 26.

The outer lobe 93 has an exterior outer lobe radius R₁ and an interior outer lobe radius R₂, thereby defining an outer lobe thickness T_{O} extending between the exterior surface 90 and the interior surface 88. The inner lobe 94 has an exterior inner lobe radius R₃ and an interior inner lobe radius R₄, thereby defining an inner lobe thickness T_{I} extending between the interior surface 88 and the exterior surface 90. As illustrated, the outer lobe thickness T_{O} may vary along the profile of the outer lobe 93 with the outer lobe thickness T_{O} being the greatest at an outer tip 98 of the outer lobe 93. The inner lobe 94 thickness may also vary along the profile of the inner lobe 94 with the inner lobe thickness T_{I} being the greatest at an inner tip 100 of the inner lobe 94. The bridge portion 96 has a bridge portion thickness T_{B} extending between the interior surface 88 and the exterior surface 90. Each convolute 92 has a height H extending between the outer lobes 93 and a width W extending between the outer diameter D_{O} and the inner diameter D_{I}. The inner lobe 94 is disposed along a mid-plane M of the convolute 92, which is roughly half of the height H. It should be appreciated that the bridge portion 96 has a slight radius of curvature (i.e., a bridge portion exterior radius and a bridge portion interior radius) between the outer lobe 93 and the inner lobe 94. According to an embodiment of the present invention, the bellows 26 may include about 16 convolutes extending between the first end 28 and the second end 30 of the bellows 26. It should be appreciated that, in some embodiments of the present invention, the bellows 26 may be molded to or fastened to a hardened sleeve portion disposed amid the convolutes 92 or between the plurality of convolutes 92 and the top 22 or the bottom 24 to provide additional structural integrity to the bellows 26.

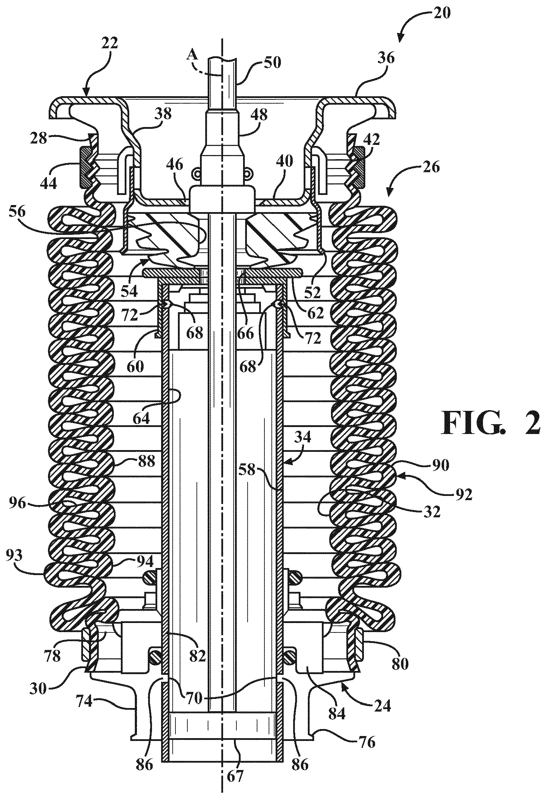

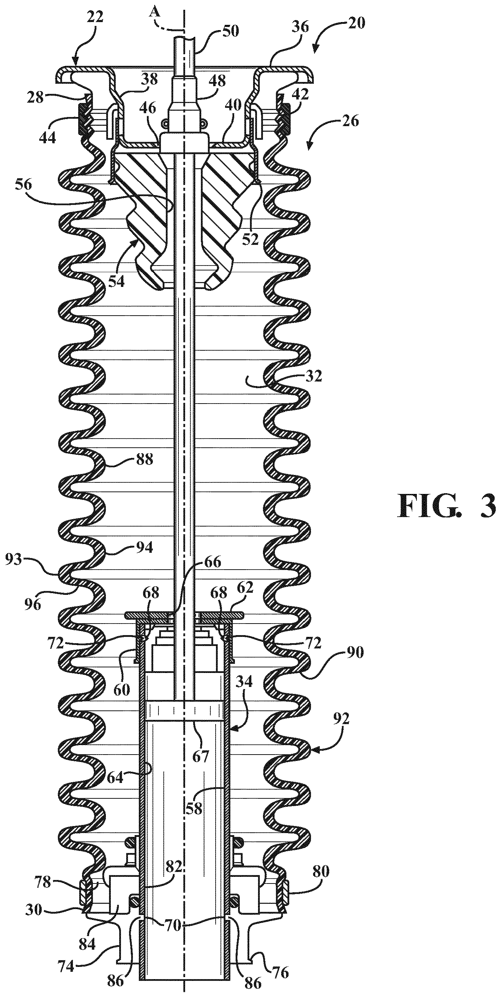

In operation, the bottom 24, the damper 34, and the bellows 26 are moveable along the center axis A between an undeformed position, as illustrated in Fig. 3, and a compressed position (i.e. full bump position), as illustrated in Fig. 2. In the compressed position, the internal spring 54 is compressed between the base wall 40 and the damper 34. Accordingly, in the compressed position the bellows 26 are also compressed wherein adjacent inner lobes 94 are abutting one another. In addition, the compressed position, adjacent outer lobes 93 are abutting one another. In the undeformed position, the internal spring 54 and the bellows 26 are undeformed. It should be noted that during operation, the air suspension assembly 20 may also be maintained in a default operating position with the air suspension assembly 20 being partially compressed, as illustrated in Fig. 1. When the air suspension assembly 20 compresses due to, for example, the vehicle passing over a bump, the bottom 24, the damper 34, and the bellows 26 are moved axially towards the top 22 thereby compressing the air suspension assembly 20. During more intense compression, the cap 60 of the damper 34 engages and compresses the internal spring 54 to soften the contact between the damper 34 and the top 22.

The dimensions of the convolute 92 in the undeformed position, as illustrated in Fig. 4, may allow the load to deflect in a predictable way compared to traditional air springs. In other words, the convolute 92 shape may offer load compensation and a raising/lowering function of a vehicle similar to the load compensation of traditional air springs. For example, in the undeformed position, the outer diameter D_{O} of the bellows 26, as defined at the exterior surface 90 of the outer lobe 93, may be about 71.44 millimeters, and the inner diameter D_{I} of the bellows, as defined at the interior surface 88 of the inner lobe 94, may be about 45.1 millimeters. The height H of the convolute 92 may be about 24.68 millimeters, the distance from the outer lobe 93 to the mid-plane M may be about 12.34 millimeters, and the width W may be about 26.31 millimeters. Furthermore, the exterior outer lobe radius R₁ may be 5.21 millimeters, and the interior outer lobe radius R₂ may be about 2.74 millimeters.

In the undeformed position, the interior inner lobe radius R₃ may be about 4.22 millimeters and extend about 30 degrees on one side of the mid-plane M and 30 degrees on the other side of the mid-plane M. In other words, interior inner lobe radius R₃ may extend 2.13 mm on either side of the mid-plane M. The outer lobe thickness T_{O} may vary across the profile of the outer lobe 93, but may be about at least about 6.13 millimeters. The inner lobe thickness T_{I} may also vary across the profile of the inner lobe 94, but may be at least about 6.25 millimeters. The exterior surface 88 of the bridge portion 96 may extend at an angle of about 11 degrees relative to outer lobe 93 and the interior surface 90 of the bridge portion 96 may extend at an angle of about 8 degrees relative to the outer lobe 94. In other words, the bridge portion thickness T_{B} may vary across the profile of the bridge portion 96. For example, the bridge portion thickness T_{B} may increase between the outer lobe 93 and the inner lobe 94.

According to an embodiment of the present invention, a valve (not shown) may be disposed in fluid communication with the chamber for changing pressure in the chamber 32 (i.e., controlling pressurized air contained in the chamber 32) in response to a force applied to the air suspension assembly 20. By controlling a pressure of the pressurized air to the chamber 32 based on the force applied to the air suspension assembly 20, the bellows 26 may be stiffened and the thrust of the air spring may be adjusted. In some embodiments, the pressurized air in the chamber corresponds to a position of the bottom 24 relative to the top 22. For example, the valve may be configured to selectively apply between 0 and at least about 5 bars of air pressure to the chamber 32 to control the full range of the air suspension assembly 20. The strength of the bellows 26 due to the convolute 92 design may allow for the air suspension assembly 20 to function and be controlled with a lower-powered compressor. For example, the thickness, height, width, curvature, and number of convolutes 92 may provide resiliency to the air suspension assembly 20.

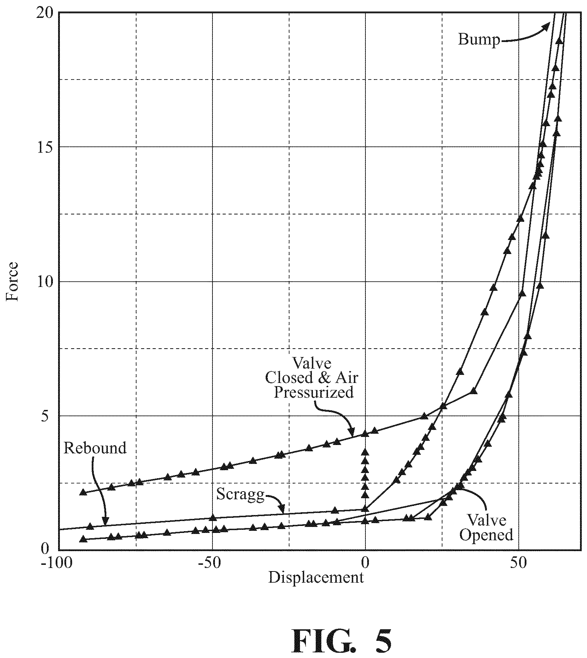

With reference to Fig. 5, it should be appreciated that in some embodiments, the load deflection curve of the air suspension assembly 20 may generally correlate to the load deflection curves of traditional air springs with selective control of the valve. For example, as shown in Fig. 5, as the bellows 26 returns from receiving about 1530 Newtons under scragg, the valve is opened as the rate of force on the bellows falls to around 18 Newtons per millimeter. To achieve traditional spring responses, as a second compression is applied to the air suspension assembly 20, the valve is closed and may hold a pressure of about 3 bars in the chamber 32 during the second compression. In some embodiments, in the default operating position, the air suspension assembly 20 is exposed to about 1090 Newtons when the valve is opened and about 1530 Newtons under scragg. The valve may be closed to hold the air pressure of the chamber 32 at about 3 bars in the default position when air suspension assembly 20 supports a load of about 4320 Newtons. During a full compression (i.e., full bump), the air suspension assembly 20 may experience between 20 and 25 kilo-Newtons per millimeter.

## Claims

1. An air suspension assembly (20) comprising:
a top (22) and a bottom (24) disposed on a center axis and spaced apart from one another;
wherein the air suspension assembly (20) further comprises a bellows (26) of an elastomeric material extending between a first end (28) secured to said top (22) and a second end (30) secured to said bottom (24) defining a chamber (32) extending between said top (22), said bottom (24), and an interior surface (88) of said bellows (26) for containing pressurized air, whereby a pressure of said pressurized air is controlled based on a force applied;
said bellows (26) having the interior surface (88) and an exterior surface (90) and having a varying bellows thickness between the interior surface (88) and the exterior surface (90), and including a plurality of convolutes (92), each having a generally sinusoidal-shaped cross-section, extending between said first end (28) and said second end (30); and
each convolute (92) of said plurality of convolutes (92) including a pair of outer lobes (93) and an inner lobe (94), wherein each convolute (92) of said plurality of convolutes (92) extends in a wave-like fashion between the pair of outer lobes (93), each having a generally arcuate-shaped cross-section, with the inner lobe (94), having a generally U-shaped cross-section, disposed radially inwardly from the pair of outer lobes (93) and between the pair of outer lobes (93), wherein the pair of outer lobes (93), spaced apart from one another along the center axis, is disposed radially outwardly from the inner lobe (94), and each outer lobe (93) of said pair of outer lobes (93) delimits an outer diameter (D_{O}) of the bellows (26), wherein each outer lobe (93) of said pair of outer lobes (93) has an exterior outer lobe radius (R₁) and an interior outer lobe radius (R₂), thereby defining an outer lobe thickness (T_{O}) extending between said interior surface (88) and said exterior surface (90) of said bellows (26), wherein the inner lobe (94) has an exterior inner lobe radius (R₃) and an interior inner lobe radius (R₄), thereby defining an inner lobe thickness (T_{I}) extending between the interior surface (88) and the exterior surface (90) of said bellows (26),
wherein the bellows (26) are moveable along the center axis between an undeformed position and a full bump position of the air suspension assembly (20), wherein the air suspension assembly (20) further includes a bridge portion (96), having a generally constant bridge portion thickness (T_{B}) extending between the interior surface (88) and the exterior surface (90) of said bellows (26), extending between said inner lobe (94) and each outer lobe (93) of said pair of outer lobes (93) to connect the inner lobe (94) to the outer lobe (93), wherein the inner lobe (94) extends between the bridge portions (96) and delimits an inner diameter (D_{I}) of the bellows (26), wherein each convolute (92) has a height (H) extending between the outer lobes (93) and a width (W) extending between the outer diameter (D_{O}) and the inner diameter (D_{I}), wherein the inner lobe (94) is disposed along a mid-plane (M) of the convolute (92), which is roughly half of the height (H), wherein the bridge portion (96) has a slight radius of curvature between the outer lobe (93) and the inner lobe (94),
**characterized in that** adjacent inner lobes (94) directly abut one another and adjacent outer lobes (93) also directly abut one another in the full bump position of the air suspension assembly (20), and adjacent bridge portions (96) are at least partially spaced from each other in the full bump position of the air suspension assembly (20),
wherein the air suspension assembly further includes a damper (34) connected to said bottom (24) and moveable with said bellows (26) between the full bump position and the undeformed position of the air suspension assembly (20); and
a jounce bumper connected to said top (22) for absorbing energy of said damper (34) when said air suspension assembly (20) is compressed, with said damper (34) compressing said jounce bumper in said full bump position and said damper (34) spaced from said jounce bumper in said undeformed position.

2. The air suspension assembly (20) as set forth in Claim 1, wherein said outer lobe thickness and said inner lobe thickness are approximately equivalent.

3. The air suspension assembly (20) as set forth in Claim 2, wherein each of said outer lobe thickness and said inner lobe thickness is greater than said bridge portion thickness.

4. The air suspension assembly (20) as set forth in Claim 3, wherein said outer lobe thickness varies along said outer lobe (93) with said outer lobe thickness being the greatest at an outer tip of said outer lobe (93).

5. The air suspension assembly (20) as set forth in Claim 3 or 4, wherein said inner lobe thickness varies along said inner lobe (94) with said inner lobe thickness being the greatest at an inner tip of said inner lobe (94).

6. The air suspension assembly (20) as set forth in any one of Claims 1 to 5, wherein a pressure of said pressurized air in said chamber (32) corresponds to a position of said bottom (24) relative to said top (22).

7. The air suspension assembly (20) as set forth in any one of Claims 1 to 6, further comprising:
a piston (67) disposed on said center axis spaced from said top (22),
the bellows (26) extending about said center axis between said first end (28) and said second end (30) connecting said top (22) and said bottom (24), and said chamber (32) being in fluid communication with said piston (57),
wherein the damper (34) is connected to said piston (67).

## Patentansprüche

1. Eine Luftfederungsbaugruppe (20), die aus Folgendem besteht:
einem Oberteil (22) und einem Unterteil (24), die auf einer Mittelachse angeordnet und voneinander beabstandet sind;
wobei die Luftfederungsbaugruppe (20) ferner einen Balg (26) aus einem elastomeren Material umfasst, der sich zwischen einem ersten Ende (28), das an dem Oberteil (22) befestigt ist, und einem zweiten Ende (30), das an dem Unterteil (24) befestigt ist, erstreckt und eine Kammer (32) definiert, die sich zwischen dem Oberteil (22), dem Unterteil (24) und einer Innenfläche (88) des Balgs (26) erstreckt, um Druckluft zu enthalten, wodurch ein Druck der Druckluft auf der Grundlage einer aufgebrachten Kraft gesteuert wird;
wobei der Balg (26) die Innenfläche (88) und eine Außenfläche (90) aufweist und eine variierende Balgdicke zwischen der Innenfläche (88) und der Außenfläche (90) hat und eine Vielzahl von Falten (92) enthält, die jeweils einen allgemein sinusförmigen Querschnitt haben und sich zwischen dem ersten Ende (28) und dem zweiten Ende (30) erstrecken; und
wobei jede Falte (92) der Vielzahl von Falten (92) ein Paar Außenlappen (93) und einen Innenlappen (94) aufweist, wobei sich jede Falte (92) der Vielzahl von Falten (92) wellenförmig zwischen dem Paar Außenlappen (93) erstreckt, die jeweils einen allgemein bogenförmigen Querschnitt aufweisen, wobei der Innenlappen (94), der einen allgemein U-förmigen Querschnitt aufweist, radial einwärts von dem Paar Außenlappen (93) und zwischen dem Paar Außenlappen (93) angeordnet ist, wobei das Paar Außenlappen (93), die voneinander entlang der Mittelachse beabstandet sind, radial auswärts von dem Innenlappen (94) angeordnet ist, und jeder Außenlappen (93) des Paares von Außenlappen (93) einen Außendurchmesser (D_{O}) des Balgs (26) begrenzt, wobei jeder Außenlappen (93) des Paares von Außenlappen (93) einen äußeren Außenlappenradius (R₁) und einen inneren Außenlappenradius (R₂) aufweist, wodurch eine Außenlappendicke (T_{O}) definiert wird, die sich zwischen der Innenfläche (88) und der Außenfläche (90) des Balgs (26) erstreckt, wobei der Innenlappen (94) einen äußeren Innenlappenradius (R₃) und einen inneren Innenlappenradius (R₄) aufweist, wodurch eine Innenlappendicke (T_{I}) definiert wird, die sich zwischen der Innenfläche (88) und der Außenfläche (90) des Balgs (26) erstreckt,
wobei der Balg (26) entlang der Mittelachse zwischen einer unverformten Position und der Vollstoßposition der Luftfederungsbaugruppe (20) bewegbar sind,
wobei die Luftfederungsbaugruppe (20) ferner einen Brückenteil (96) mit einer allgemein konstanten Brückenteil-Dicke (T_{B}) aufweist, der sich zwischen der Innenfläche (88) und der Außenfläche (90) des Balgs (26) erstreckt, der sich zwischen dem Innenlappen (94) und jedem Außenlappen (93) des Paares Außenlappen (93) erstreckt, um den Innenlappen (94) mit dem Außenlappen (93) zu verbinden, wobei sich der Innenlappen (94) zwischen den Brückenteilen (96) erstreckt und einen Innendurchmesser (D_{I}) des Balgs (26) begrenzt, wobei jede Falte (92) eine Höhe (H) aufweist, die sich zwischen den Außenlappen (93) erstreckt, und eine Breite (W), die sich zwischen dem Außendurchmesser (D_{O}) und dem Innendurchmesser (D_{I}) erstreckt, wobei der Innenlappen (94) entlang einer Mittelebene (M) der Falte (92) angeordnet ist, die etwa die Hälfte der Höhe (H) beträgt, wobei der Brückenteil (96) einen leichten Krümmungsradius zwischen dem Außenlappen (93) und dem Innenlappen (94) aufweist,
**dadurch gekennzeichnet, dass** benachbarte Innenlappen (94) direkt aneinanderstoßen und benachbarte Außenlappen (93) ebenfalls direkt aneinanderstoßen, wenn die Luftfederungsbaugruppe (20) in der Vollstoßposition ist,
und benachbarte Brückenteile (96) der Luftfederungsbaugruppe (20) in der Vollstoßposition zumindest teilweise voneinander beabstandet sind,
wobei die Luftfederungsbaugruppe ferner einen Dämpfer (34) aufweist, der mit dem Unterteil (24) verbunden ist und mit dem Balg (26) zwischen der Vollstoßposition und der unverformten Position der Luftfederungsbaugruppe (20) bewegbar ist; und
einen Anschlagpuffer, der mit dem Oberteil (22) verbunden ist, um Energie des Dämpfers (34) zu absorbieren, wenn die Luftfederungsbaugruppe (20) zusammengedrückt wird, wobei der Dämpfer (34) den Anschlagpuffer in der Vollstoßposition zusammendrückt und der Dämpfer (34) in der unverformten Position von dem Anschlagpuffer beabstandet ist.

2. Die Luftfederungsbaugruppe (20) nach Anspruch 1, wobei die Dicke des Außenlappens und die Dicke des Innenlappens ungefähr gleich sind.

3. Die Luftfederungsbaugruppe (20) nach Anspruch 2, wobei die Dicke des Außenlappens und die Dicke des Innenlappens jeweils größer ist als die Dicke des Brückenteils.

4. Die Luftfederungsbaugruppe (20) nach Anspruch 3, bei der die Dicke des Außenlappens entlang des Außenlappens (93) variiert, wobei die Dicke des Außenlappens an einer äußeren Spitze des Außenlappens (93) am größten ist.

5. Die Luftfederungsbaugruppe (20) nach Anspruch 3 oder 4, wobei die Dicke des Innenlappens entlang des Innenlappens (94) variiert, wobei die Dicke des Innenlappens an einer inneren Spitze des Innenlappens (94) am größten ist.

6. Die Luftfederungsbaugruppe (20) nach einem der Ansprüche 1 bis 5, wobei ein Druck der Druckluft in der Kammer (32) einer Position des Unterteils (24) relativ zum Oberteil (22) entspricht.

7. Die Luftfederungsbaugruppe (20) nach einem der Ansprüche 1 bis 6, ferner umfassend:
einen Kolben (67), der auf der Mittelachse im Abstand von dem Oberteil (22) angeordnet ist;
den Balg (26), der sich um die Mittelachse zwischen dem ersten Ende (28) und dem zweiten Ende (30) erstreckt, die das Oberteil (22) und das Unterteil (24) verbinden, und die Kammer (32) in Flüssigkeitsverbindung mit dem Kolben (67) steht, wobei der Dämpfer (34) mit dem Kolben (67) verbunden ist.

## Revendications

1. Un ensemble de suspension pneumatique (20) comprenant:
un élément supérieur (22) et un élément inférieur (24) disposés sur un axe central et espacés l'un de l'autre;
dans lequel l'ensemble de suspension pneumatique (20) comprend en outre un soufflet (26) en matériau élastomère s'étendant entre une première extrémité (28) fixée audit élément supérieur (22) et une seconde extrémité (30) fixée audit élément inférieur (24), définissant une chambre (32) s'étendant entre ledit élément supérieur (22), ledit élément inférieur (24) et une surface intérieure (88) dudit soufflet (26) pour contenir de l'air sous pression, de sorte que la pression dudit air sous pression est régulée en fonction d'une force appliquée;
ledit soufflet (26) ayant la surface intérieure (88) et une surface extérieure (90) et présentant une épaisseur variable du soufflet entre la surface intérieure (88) et la surface extérieure (90), et comprenant une pluralité de convolutions (92), chacune présentant une section transversale généralement sinusoïdale, s'étendant entre ladite première extrémité (28) et ladite seconde extrémité (30); et
chaque convolution (92) de ladite pluralité de convolutions (92) incluant une paire de lobes extérieurs (93) et un lobe intérieur (94), dans lequel chaque convolution (92) de ladite pluralité de convolutions (92) s'étend de manière ondulée entre la paire de deux lobes extérieurs (93), chacun ayant une section transversale généralement arquée, avec le lobe intérieur (94), ayant une section transversale généralement en forme de U, disposé radialement vers l'intérieur par rapport à la paire de lobes extérieurs (93) et entre la paire de lobes extérieurs (93), où la paire de lobes extérieurs (93), espacés l'un de l'autre le long de l'axe central, est disposée radialement vers l'extérieur par rapport au lobe intérieur (94) et chaque lobe extérieur (93) de ladite paire de lobes extérieurs (93) délimite un diamètre extérieur (D_{O}) du soufflet (26), où chaque lobe extérieur (93) de ladite paire de lobes extérieurs (93) présente un rayon extérieur de lobe extérieur (R₁) et un rayon intérieur de lobe extérieur (R₂), définissant ainsi une épaisseur de lobe extérieur (T_{O}) s'étendant entre ladite surface intérieure (88) et ladite surface extérieure (90) dudit soufflet (26), où le lobe intérieur (94) présente un rayon extérieur de lobe intérieur (R₃) et un rayon intérieur de lobe intérieur (R₄), définissant ainsi une épaisseur de lobe intérieur (T_{I}) s'étendant entre la surface intérieure (88) et la surface extérieure (90) dudit soufflet (26),
dans lequel le soufflet (26) est mobile le long de l'axe central entre une position non déformée et une position de butée complète de l'ensemble de suspension pneumatique (20),
dans lequel l'ensemble de suspension pneumatique (20) comprend en outre une partie de pont (96), présentant une épaisseur de partie de pont généralement constante (T_{B}) s'étendant entre la surface intérieure (88) et la surface extérieure (90) dudit soufflet (26), s'étendant entre ledit lobe intérieur (94) et chaque lobe extérieur (93) de ladite paire de lobes extérieurs (93) pour connecter le lobe intérieur (94) au lobe extérieur (93), où le lobe intérieur (94) s'étend entre les parties de pont (96) et délimite un diamètre intérieur (D_{I}) du soufflet (26), où chaque convolution (92) a une hauteur (H) s'étendant entre les lobes extérieurs (93) et une largeur (W) s'étendant entre le diamètre extérieur (D_{O}) et le diamètre intérieur (D_{I}), où le lobe intérieur (94) est disposé le long d'un plan médian (M) de la convolution (92), correspondant approximativement à la moitié de la hauteur (H), où la partie de pont (96) présente un léger rayon de courbure entre le lobe extérieur (93) et le lobe intérieur (94),
**caractérisé en ce que** les lobes intérieurs adjacents (94) sont directement en contact l'un avec l'autre et les lobes extérieurs adjacents (93) sont également directement en contact l'un avec l'autre dans la position de butée complète de l'ensemble de suspension pneumatique (20),
et les parties de pont adjacentes (96) sont au moins partiellement espacées les unes des autres dans la position de butée complète de l'ensemble de suspension pneumatique (20),
dans lequel l'ensemble de suspension pneumatique comprend en outre un amortisseur (34) connecté audit élément inférieur (24) et mobile avec ledit soufflet (26) entre la position de butée complète et la position non déformée de l'ensemble de suspension pneumatique (20); et
un butoir de compression connecté audit élément supérieur (22) pour absorber l'énergie dudit amortisseur (34) lorsque ledit ensemble de suspension pneumatique (20) est comprimé, ledit amortisseur (34) comprimant ledit butoir de compression dans ladite position de butée complète et ledit amortisseur (34) étant espacé dudit butoir de compression dans ladite position non déformée.

2. L'ensemble de suspension pneumatique (20) selon la revendication 1, dans lequel ladite épaisseur de lobe extérieur et ladite épaisseur de lobe intérieur sont approximativement équivalentes.

3. L'ensemble de suspension pneumatique (20) selon la revendication 2, dans lequel chacune desdites épaisseur de lobe extérieur et épaisseur de lobe intérieur est supérieure à ladite épaisseur de partie de pont.

4. L'ensemble de suspension pneumatique (20) selon la revendication 3, dans lequel ladite épaisseur de lobe extérieur varie le long dudit lobe extérieur (93), ladite épaisseur étant maximale à une extrémité externe dudit lobe extérieur (93).

5. L'ensemble de suspension pneumatique (20) selon la revendication 3 ou 4, dans lequel ladite épaisseur de lobe intérieur varie le long dudit lobe intérieur (94), ladite épaisseur étant maximale à une extrémité interne dudit lobe intérieur (94).

6. L'ensemble de suspension pneumatique (20) selon l'une quelconque des revendications 1 à 5, dans lequel une pression dudit air sous pression dans ladite chambre (32) correspond à une position dudit élément inférieur (24) par rapport audit élément supérieur (22).

7. L'ensemble de suspension pneumatique (20) selon l'une quelconque des revendications 1 à 6, comprenant en outre:
un piston (67) disposé sur ledit axe central et espacé dudit élément supérieur (22)
ledit soufflet (26) s'étendant autour dudit axe central entre ladite première extrémité (28) et ladite seconde extrémité (30) reliant ledit élément supérieur (22) et ledit élément inférieur (24), et ladite chambre (32) étant en communication fluidique avec ledit piston (67), dans lequel ledit amortisseur (34) est connecté audit piston (67).
